# EUROPÄISCHE PATENTSCHRIFT

(11) **EP 0 233 479 B1**
(45) Veröffentlichungstag und Bekanntmachung des Hinweises auf die Patenterteilung: **17.03.1993**
(21) Anmeldenummer: 87100563.3
(22) Anmeldetag: 17.01.1987
(51) Int. Cl.: B23K 26/02, G02B 5/00, H01S 3/00, H01S 3/10

(54) **Einrichtung zur Begrenzung der maximalen Strahlungsintensität**
Limitating device for the maximum radiant intensity
Dispositif pour limiter la puissance de rayonnement maximale

(30) Priorität: 21.02.1986 DE 3605635
(43) Veröffentlichungstag der Anmeldung: 26.08.1987
(73) Patentinhaber: Deutsche Aerospace AG, 81663 München (DE)
(72) Erfinder: Wondrazek, Fritz, Dr., D-8086 Pfaffenhofen (DE); Hahn, Andreas, D-8029 Sauerlach (DE)

(56) Entgegenhaltungen:
- DE-A- 1 945 116
- DE-A- 2 832 847
- DE-A- 2 833 352
- GB-A- 1 266 777
- US-A- 3 433 555
- IEEE JOURNAL OF QUANTUM ELECTRONICS. vol. QE-19, no. 4, April 1983, NEW YORK US Seiten 731 - 735; M.J.SOILEAU ET AL.: "Optical Power Limiter with Picosecond Response Time"

## Beschreibung

Die Erfindung betrifft eine Einrichtung zur Einkopplung einer optischen Strahlung in eine Lichtleitfaser bzw. zur Begrenzung der maximalen Strahlungsintensität nach dem Oberbegriff des Anspruches 1 oder 4.

Aus der US-A3 433 555 ist eine als optische Sicherung bezeichnete Einrichtung bekannt , bei der innerhalb des parallelen Strahlenganges eines Lasers eine, eine Sammellinse sowie einen Kollimator aufweisende und mit Gas gefüllte Kammer angeordnet ist, wobei im Brennpunkt der Sammellinse, innerhalb der Kammer, bei Überschreiten einer vorgegebenen Strahlungsintensität ein elektrischer Durchbruch in dem Gas erfolgt. Ein solcher Durchbruch hat zur Folge, daß die Laserstrahlung in dem entstehenden Plasma geschwächt wird. Bei dieser Einrichtung ist der Strahlengang vor und hinter der Durchbruchstrecke bzgl. Richtung und Durchmesser gleich, so daß der ursprüngliche Laserstrahl , wenn er die vorgegebene Strahlungsintensität nicht überschreitet, im wesentlichen unverändert bleibt. Aus diesem Grund läßt sich diese bekannte Einrichtung nicht zur Einkopplung eines Laserstrahls in eine Lichtleitfaser verwenden.

Aus der DE-A-1 945 116 ist eine Schutzanordnung gegen intensive Laserbestrahlung bekannt, bei der entweder ein mit photoempfindlichen Materialien versetztes Glas oder eine reflektierende Spiegeloberfläche mit begrenzter thermischer Belastbarkeit zur Anwendung kommt. Photoempfindliche Gläser reagieren jedoch insbesondere für die medizinische Anwendung der Laserstrahlung zu langsam; eine einmal zerstörte Spiegeloberfläche hingegen verhindert einen kontinuierlichen Betrieb des Lasers.

Die bekannten Einrichtungen sind insbesondere nicht geeignet, die Strahlungsinitensität einer Strahlungsquelle auf ein bestimmtes Maximum zu begrenzen, darunterliegende Intensitäten jedoch ungehindert durchzulassen. Auch reagieren derartige Einrichtungen viel zu langsam auf Intensitätsspitzen, so daß insbesondere bei der Verwendung von Lasern als Strahlungsquelle Materialschäden aufgrund von Intensitätsüberhöhungen auftreten. Insbesondere bei Impulslasern können derartige Intensitätsüberhöhungen durch räumliche (hot spots) und zeitliche Modulation des Laserimpulses entstehen.

Ausgehend von der aus der US-A-3 433 555 bekannten Einrichtung ist es Aufgabe der Erfindung, diese Einrichtung derart weiterzubilden, daß sie die Einkopplung höherer mittlerer Strahlungsintensitäten in eine Lichtleitfaser als bisher ermöglicht.

Diese Aufgabe wird durch eine nach den Merkmalen der Patentansprüche 1 oder 4 ausgebildete Einrichtung gelöst.

Die Erfindung macht sich die Erkenntnis zu Nutze, daß im Brennpunkt eines fokussierten Laserstrahles bei Überschreiten materialspezifischer Energiedichten durch Multiphotonenabsorption und Kaskaden-Ionisation ein Plasma entsteht, welches der Laserstrahl nicht mehr durchdringen kann (siehe US-A3 433 555 oder auch Dissertation von Dipl.Phys Jürgen Munschau "Theoretische und experimentielle Untersuchungen zur Erzeugung, Ausbreitung und Anwendung laserinduzierter Stoßwellen", TU Berlin 1981, Seiten 46ff). Dieser Vorgang wird als Breakdown-Effekt bezeichnet, wobei der sog. Breakdown-Schwellwert , also der Wert der Strahlungsintensität, bei der die Plasmabildung einsetzt, von dem durchstrahlten Medium abhängig ist. Dieser Breakdown-Schwellwert beträgt beispielsweise für Luft unter Atmosphärendruck ca. 2 x 10¹⁴ W/m² und bei destilliertem Wasser 6,4 x 10¹³ W/m². Der Breakdown-Effekt wurde in der vorgenannten Dissertation im Zusammenhang mit der Erzeugung von Stoßwellen untersucht; darüberhinausgehende technische Anwendungen sind nicht erwähnt.

Eine derartige Durchbruchstrecke mit definiertem Breakdown-Schwellwert wird zur Absicherung von Lichtleitfasern bei Einkopplung hoher Strahlungsintensitäten eingesetzt. Die bei der Verwendung von Impulslasern auftretenden Laserimpulse mit Spitzenintensitäten, die über der Zerstörungsschwelle des Lichtleitermaterials liegen werden durch den sofort einsetzenden Breakdown-Effekt absorbiert, womit Materialschäden insbesondere im Bereich der Einkoppelseite des Lichtleiters vermieden werden. Vor allem in den Fällen, in denen das Laserlicht als Werkzeug zur Material- oder Gewebebearbeitung dienen soll, würden derartige Intensitätsspitzen besonders stören , da sie die eingestrahlte Gesamtintensität nicht unbeträchtlich erhöhen können.

Bei der Verwendung von Gasen als Breakdown-Medium kann der Breakdown-Schwellwert in vorteilhafter Weise durch den Gasdruck eingestellt werden.

Zur Einkopplung hoher Strahlungsintensitäten in eine Lichtleitfaser wird nun die Strahlung nicht wie bisher üblich,fokussiert, sondern divergierend in die Lichtleitfaser eingekoppelt wird. Dies kann im einfachsten Falle durch Anordnung der Lichtleitfaser-Stirnfläche hinter dem Fokuspunkt der Durchbruchstrecke oder durch eine direkt vor der Stirnfläche der Lichtleitfaser angeordnete Zerstreuungslinse oder durch eine konkav ausgebildete Eintrittsstirnfläche der Lichtleitfaser durchgeführt werden. Als Öffnungswinkel für das in die Lichtleitfaser eintretenden Strahlenbündel hat sich ein Minimum von 8° herausgestellt. Dadurch wird bei der Verwendung von Impulslasern die Impulsenergie über mehrere Moden verteilt, wodurch lokale Intensitätsüberhöhungen und Selbstfokussierung unterdrückt werden. Durch diese Maßnahme wird die Zerstörungsschwelle der Lichtleitfaser heraufgesetzt, so daß in Verbindung mit der vorgeschalteten Durchbruchstrecke eine höhere mittlere Strahlungsintensität und damit Strahlungsleistung durch die Lichtleitfaser geleitet werden kann.

Im folgenden wird die Erfindung anhand zweier teilweise schematisch dargestellter Ausführungsbeispiele beschrieben.

Es zeigen
- Fig. 1: eine Einrichtung zur Einkopplung hoher Strahlungsintensitäten in eine Lichtleitfaser,
- Fig. 2: eine Einrichtung gemäß Fig. 1 mit indirekt wirkender Durchbruchstrecke;

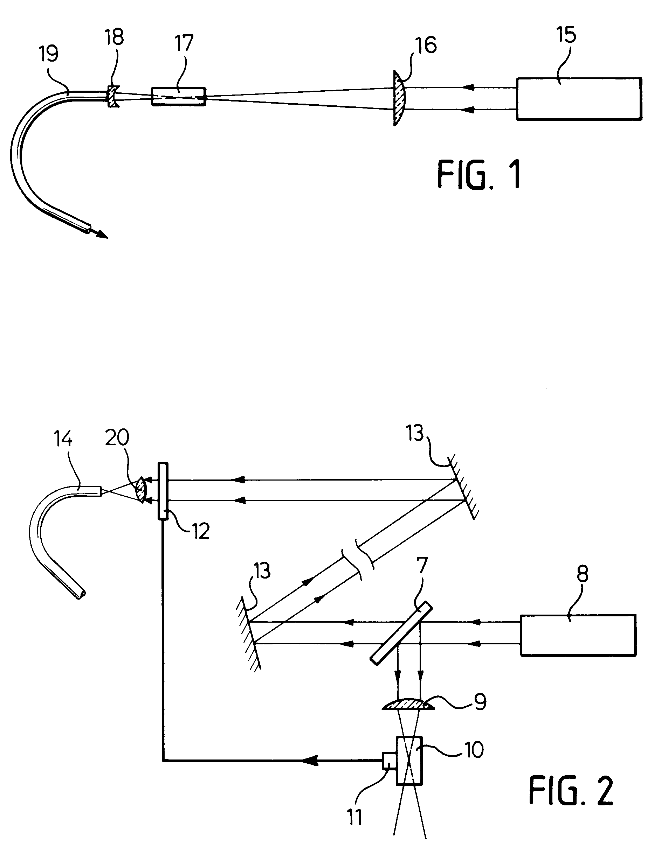

Die Fig. 1 zeigt eine Einrichtung zum Einkoppeln hoher Strahlungsintensitäten in eine Lichtleitfaser. Dabei wird die Strahlung eines Lasers 15 mittels einer Fokussierlinse 16 auf eine Durchbruchstrecke 17 fokussiert, wobei die austretende Strahlung über eine Zerstreuungslinse 18 in die Lichtleitfaser 19 eingekoppelt wird. Die Durchbruchstrecke 17 besteht aus einem für den Spektralbereich des Lasers hochtransparenten Material, wobei es sich hierbei um eine Flüssigkeit oder ein Gas handeln kann. Der Breakdown-Schwellwert , also der Wert der Strahlungsintensität, bei der eine Plasmabildung schlagartig einsetzt und die Durchbruchstrecke für das Laserlicht undurchlässig wird, ist materialabhängig und läßt sich insbesondere bei Gasen leicht durch Druckänderungen beeinflussen. Bei Verwendung von Gasen kommt vorteilhafterweise noch hinzu, daß die Durchbruckstrecke nach einem Breakdown sich sehr schnell wieder regeneriert und damit wieder transparent wird. Durch geeignete Wahl der Brennweite der Fokussierlinse 16 und des verwendeten Materials für die Durchbruchstrecke ist die Schaltschwelle über einen großen Bereich variabel. Nähere Angaben hierzu, insbesondere zu dem Einfluß der Optik können der o. g. Dissertation entnommen werden. Da die Schadensschwellen optischer Materialien im Bereich von einigen 10¹³ W/m² liegen, lassen sich bereits mit den in der o. g. Dissertation untersuchten Materialien Methanol, Glyzerin, destilliertem Wasser und Luft als Durchbruchmaterial brauchbare Sicherungen von optischen Komponenten vor überhöhten Strahlungsintensitäten schaffen. Aufgrund der hohen, in Nanosekundenbereich liegenden Schaltgeschwindigkeit werden mit einer derartigen Einrichtung schädliche Leistungsspitzen beispielsweise aus Impulslasern herausgefiltert werden , so daß die durchschnittliche Intensität der einzelnen in die Lichtleitfaser 14 einzukoppelnden Laserimpulse sehr viel höher gewählt werden kann als es bisher möglich war, ohne diese durch zu intensive Laserimpulse zu zerstören. Die Lebensdauer derart geschützter Lichtleitfasern wird dadurch drastisch erhöht.

Die Zerstreuungslinse 18 verteilt die Strahlungsenergie über mehrere Moden, wodurch lokale Intensitätsüberhöhungen und Selbstfokussierung unterdrückt wird. Die Zerstreuungslinse 18 befindet sich unmittelbar an der Einkoppelstirnfläche der Lichtleitfaser und ist so ausgelegt, daß das in die Lichtleitfaser eintretende Strahlungsbündel einen Öffnungswinkel von mindestens 8° aufweist. Die maximale Aufweitung des einzukoppelnden Strahlungsbündels ist vom Akzeptanzwinkel der Lichtleitfaser abhängig. Zur Verminderung von Reflexionsverlusten kann der Zwischenraum zwischen der Zerstreuungslinse 18 und der Lichtleitfaser 19 in bekannter Weise verklebt oder mit einer sog. Indexmatching -Flüssigkeit gefüllt werden.

Die Funktion der Zerstreuungslinse 18 kann auch von einer entsprechend konkav angeschliffenen oder geätzten Stirnfläche der Lichtleitfaser übernommen werden.

Fig. 2 zeigt ein weiteres Ausführungsbeispiel einer Vorrichtung zum Schutz von Lichtleitfasern vor unzulässig hohen Strahlungsintensitäten, bei der mittels eines Strahlenteilers 7 ein kleiner Bruchteil der Strahlungsenergie eines Impulslasers 8 ausgekoppelt und mittels einer Fokussierlinse 9 in eine Durchbruchstrecke 10 geleitet wird. Der Breakdown-Schwellwert dieser Durchbruchstrecke 10 ist auf den ausgekoppelten Anteil der gesamten Strahlungsenergie des Lasers 8 abgestimmt. Mittels eines optischen oder elektrischen Detektors 11 wird ein optischer Durchbruch registriert und mit einem entsprechenden elektrischen Signal ein Strahlenschalter 12 gesteuert. Der Strahlenschalter 12 ist zwischen einer dem Strahlenteiler 7 nachgeschalteten optischen Verzögerungsstrecke 13 und der zu schützenden Lichtleitfaser 14 angeordnet und kann z.B. auf elektromagnetischer oder elektrooptischer Basis , z.B. als Kerr- oder als Flüssigkristallzelle, aufgebaut sein. Die Einkopplung der Laserstrahlung in die Lichtleitfaser erfolgt im divergenten Strahlengang einer Fokussierlinse 20. Der Vorteil dieses Ausführungsbeispieles gegenüber dem in Fig. 1 dargestellten besteht darin, daß keine die Strahlparameter des Lasers (z.B. Phasenfront) beeinflussende Manipulationen am Laserstrahl vorgenommen werden müssen.

## Patentansprüche

1. Einrichtung zur Einkopplung der optischen Strahlung mit hoher Strahlungsintensität und mit vorgegebenem Strahldurchmesser in eine Lichtleitfaser mit kleinerem Durchmesser des Strahlenganges als der Strahlquerschnitt, **dadurch gekennzeichnet,** daß vor der Lichtleitfaser (19) eine transparente Durchbruchstrecke (17) mit definiertem Breakdown-Schwellwert angeordnet ist, deren Breakdown-Schwellwert unterhalb des Zerstörungsschwellwertes der Lichtleitfaser (19) liegt, und in welche die optische Strahlung durch eine fokussierende Optik (3, 16) eintritt, aus dieser divergent austritt und divergent in die Stirnfläche der Lichtleitfaser (19) eintritt.

2. Einrichtung nach Anspruch 1, dadurch **gekennzeichnet,** daß der Öffnungswinkel des in die Lichtleitfaser (19) eintretenden divergierenden Strahlenbündels mindestens 8° beträgt .

3. Einrichtung nach Anspruch 1 oder 2, dadurch **gekennzeichnet,** daß die Lichtleitfaser eine konkave Eintrittsstirnfläche aufweist.

4. Einrichtung zur Begrenzung der maximalen, in eine Lichtleitfaser einzukoppelnden Strahlungsintensität einer Strahlenquelle von hoher Strahlungsintensität, **dadurch gekennzeichnet,** daß ein Strahlenteiler (7) den Strahl der Strahlenquelle in einen Hauptstrahl und einen Nebenstrahl teilt, wobei im Bereich des Nebenstrahls ein optischer Detektor (11) angeordnet ist, der ein Steuersignal abgibt, daß der Hauptstrahl auf eine Lichtleitfaser (14) und der Nebenstrahl auf eine transparente Durchbruchstrecke (10) mit definiertem Breakdown-Schwellwert gerichtet wird, daß der optische Detektor (11) an der Durchbruchstrecke (10) angeordnet ist und daß vor der Lichtleitfaser (14) ein vom optischen Detektor (11) gesteuerter Strahlenschalter (12) angeordnet ist.

5. Einrichtung nach einem der Ansprüche 1 bis 4 dadurch **gekennzeichnet,** daß die Durchbruchstrecke (10, 17) ein Gas enthält und, daß der Gasdruck einstellbar ist.

## Claims

1. Device for inputting optical radiation of high radiation intensity and with a specified beam diameter into an optical fibre of smaller beam-path diameter than the beam cross-section, **characterised in that** in front of the optical fibre (19) is arranged a transparent breakthrough path (17) of defined breakdown threshold value, the breakdown threshold of which lies below the destruction threshold of an optical fibre (19), and wherein the optical beam enters through focussing optics (3, 16), divergently exits same and divergently enters the end surface of an optical fibre (19).

2. Device according to claim 1, **characterised in that** the opening angle of the diverging radiation beam which enters the optical fibre (19) is at least 8°.

3. Device according to claim 1 or 2, **characterised in that** the optical fibre comprises a concave inlet surface.

4. Device for limitation of maximum radiation intensity of a radiation source of high radiation intensity to be input into an optical fibre, **characterised in that** a beam splitter (7) splits the beam of a radiation source into a main beam and a secondary beam, and that in the area of the secondary beam is arranged an optical detector (11) which emits a control signal, that the main beam is oriented towards an optical fibre (14) and the secondary beam towards a transparent breakthrough path (17) of defined breakdown threshold, that the optical detector (11) is arranged at the breakthrough path (10), and that in front of the optical fibre (14) is arranged a beam switch (12) which is controlled by the optical detector (11).

5. Device according to one of claims 1 to 4, **characterised in that** the breakthrough path (10, 17) contains a gas, and that the gas pressure is adjustable.

## Revendications

1. Dispositif pour amener le rayon optique de forte intensité et de diamètre prédéterminé dans une fibre optique dont le diamètre de passage du rayon est inférieur au diamètre du rayon, caractérisé par le fait qu'une zone de rupture (17) transparente à seuil de rupture prédéterminé, inférieur au seuil de destruction de la fibre optique (19), est disposée devant la fibre optique (19), zone dans laquelle le rayonnement optique entre par l'intermédiaire d'une optique de focalisation (3, 16) en sort et pénètre en étant divergent dans la fibre optique (19).

2. Dispositif selon la revendication 1, caractérisé par le fait que l'angle d'ouverture du faisceau divergent entrant dans la fibre optique (19) est d'au moins 8°.

3. Dispositif selon la revendication 1 ou 2, caractérisé par le fait que la fibre optique comporte une surface d'entrée concave.

4. Dispositif de limitation de l'intensité de rayonnement maximale d'une source de rayonnement de forte intensité introduite dans une fibre optique, caractérisé par le fait qu'un diviseur de rayon (7) divise le rayon de la source de rayons en un rayon principal et un rayon secondaire, un détecteur optique (11) étant disposé dans la région du rayon secondaire et délivrant un signal de commande, que le rayon principal est dirigé vers une fibre optique (14) et le rayon secondaire est dirigé vers une zone de rupture (10) transparente à seuil de rupture prédéterminé, que le détecteur optique (11) est placé au niveau de la zone de rupture (10) et qu'un commutateur de rayons (12) piloté par le détecteur optique (11) est placé devant la fibre optique (14).

5. Dispositif selon l'une des revendications 1 à 4, caractérisé par le fait que la zone de rupture (10, 17) contient un gaz et que la pression du gaz est réglable.
